# EUROPÄISCHE PATENTSCHRIFT

(11) **EP 2 570 765 B1**
(45) Veröffentlichungstag und Bekanntmachung des Hinweises auf die Patenterteilung: **18.06.2014**
(21) Anmeldenummer: 12184458.3
(22) Anmeldetag: 14.09.2012
(51) Int. Cl.: G01B 3/06

(54) **Gliedermassstab**
Folding ruler
Mètre pliant

(30) Priorität: 15.09.2011 CH 15292011
(43) Veröffentlichungstag der Anmeldung: 20.03.2013
(73) Patentinhaber: Kunststoffwerk AG Buchs, 9471 Buchs SG (CH)
(72) Erfinder: Ljatifi, Mehmed, 9470 Buchs (CH); Rudolph, Martin, 6714 Nüziders (AT); Benz, Josef, 8730 Uznach (CH)
(74) Vertreter: Hasler, Erich

(56) Entgegenhaltungen:
- EP-A1- 0 540 845
- DE-A1- 1 812 436

## Beschreibung

### Technisches Gebiet

Die Erfindung betrifft einen Gliedermassstab gemäss Oberbegriff des ersten Hauptanspruchs.

### Stand der Technik

Gliedermassstäbe sind im Baugewerbe und anderen handwerklichen Berufen, sowie bei Heimwerkern seit vielen Jahren als nützliche Hilfsmittel bekannt. Es existieren verschiedene Varianten dieses Messgeräts, wobei sich diese primär in der Art und Weise unterscheiden, in der die starren, mit Masseinteilungen versehenen Glieder miteinander verbunden sind. Bei der wohl am weitesten verbreiteten Ausführungsform sind die Glieder an ihren Enden über Gelenke miteinander verbundenen, wobei die Gelenke jeweils eine Aussparung und eine drehbar in der Aussparung gelagerte Achse aufweisen. Die Achse ist im Allgemeinen genietet. Um die Glieder in einer zusammengeklappten und einer auseinandergeklappten Stellung arretieren zu können, sind bei zwei miteinander verbundenen Gliedern beidseitig der Achse Erhebungen und korrespondierende Vertiefungen vorgesehen. Derlei Gliedermassstäbe werden zum Beispiel in den Druckschriften EP 1 965 168 A1, DE 10 2009 007 556 A1, CH 479 045, CH 570 601, CH 631 545 und CH 494 390 beschrieben. Alternative Ausführungvarianten sind beispielsweise aus der GB 1,173,229 und der GB 1268 052 bekannt.

Die beschriebenen Gelenke haben jedoch einige Nachteile. Unter anderem benötigen Sie wegen der seitlich der Achsen angeordneten Vertiefungen und Erhebungen relativ viel Platz. Darüber hinaus erstreckt sich die Achse meist durch beide zu verbindenden Glieder hindurch und ist somit von aussen sichtbar bzw. erschwert an den entsprechenden Stellen das Anbringen der Masseinteilung. Ist keine durchgehende Achse vorgesehen, so wird die Drehbarkeit oft durch spezielle Verbindungsmittel hergestellt, welche an den Gliedern befestigt werden müssen. Meist sind die Verbindungsmittel in einem solchen Fall aus Metall gefertigte, drehbar miteinander verbundene Blechstücke, die die Glieder zur Befestigung seitlich umfassen. Auch hier ist die Verbindung von aussen sichtbar und beschränkt unter Anderem den Platz auf den Schmalseiten der Glieder zum Anbringen von Werbung. Der wesentlichste Nachteil der oben beschriebenen Arten, die Glieder eines Gliedermassstabs zu verbinden, besteht jedoch in den relativ aufwendigen Herstellungsverfahren.

Aus der EP 0 540 845 A1 und der DE 1812 436 sind Gliedermassstäbe aus Kunststoff bekannt, deren stabförmige Glieder über Rastverbindungen drehgelenkig aneinandergehalten sind. Am einen Glied ist jeweils ein Zapfen mit einem pilzartig erweiterten Kopf vorgesehen, während am damit zu verbindenden Glied Greifelemente angebracht sind, die eine Rastaussparung für den Zapfenkopf begrenzen und als federnd nach aussen verstellbare Schnapphaken ausgeführt sind. Die mit den Greifelementen in Kontakt tretenden Teile der Zapfen sind kreiszylindrisch ausgeführt und setzen der Drehung des Zapfens in der Rastaussparung keinen Widerstand entgegen. Deshalb benötigen auch diese Ausführungsvarianten Mittel wie die oben beschriebenen seitlich der Achsen angeordneten Vertiefungen und Erhebungen um eine Arretierung der Glieder in bestimmten Drehstellungen zu erreichen.

### Aufgabe der Erfindung

Es ist deshalb eine Aufgabe der vorliegenden Erfindung, einen Gliedermassstab bereitzustellen, welcher zumindest einige der eingangs erwähnten Nachteile nicht aufweist. Insbesondere ist es ein Ziel, einen Gliedermassstab vorzugschlagen, welcher einfacher und damit preiswerter herzustellen ist. Weitere Vorteile und Ziele der vorliegenden Erfindung ergeben sich aus der nachfolgenden Beschreibung.

### Darstellung der Erfindung

Die oben genannte Aufgabe wird erfindungsgemäss gelöst durch einen Gliedermassstab nach Anspruch 1. Es handelt sich dabei um einen Gliedermassstab mit einer Mehrzahl von Gliedern, die an ihren Enden über Gelenke miteinander verbundenen sind, wobei die Gelenke jeweils eine Aussparung und eine drehbar in der Aussparung gelagerte Achse aufweisen. Der Gliedermassstab zeichnet sich dadurch aus, dass die Aussparungen und Achsen Schnappverbindungen bilden, die die Glieder aneinander halten. Dies vereinfacht das Herstellungsverfahren und wirkt somit kostensenkend. Es sind mindestens ein erstes und ein zweites Glied vorgesehen, wobei das erste Glied zweckmässigerweise eine Aussparung aufweist, deren Öffnung von mindestens einem elastischen Element begrenzt wird. Zur drehbaren Verbindung des ersten und des zweiten Glieds ist eine in die Aussparung aufnehmbare Achse vorgesehen, wobei die Achse einen vorderen Abschnitt und einen sich an den vorderen Abschnitt anschliessenden mittleren Abschnitt aufweist. Der mittlere Abschnitt steht in Kontakt mit dem elastischen Element, wenn die Achse in die Aussparung aufgenommen ist. Er weist zu diesem Zweck mehrere Kontaktflächen für den Kontakt mit dem elastischen Element auf. Die seitlich der und zwischen den Kontaktflächen entlang der Achse verlaufenden Bereiche des mittleren Abschnitts weisen einen grösseren Abstand vom Achsenmittelpunkt auf, als die Kontaktflächen.

Nachfolgend werden Ausgestaltungsformen der Erfindung beschrieben. Die in diesem Zusammenhang erwähnten Merkmale seien (individuell) als bevorzugte Merkmale zu betrachten, die einzeln oder in beliebiger Kombination verwirklicht sein können, vorausgesetzt sie schliessen sich nicht gegenseitig aus.

Besonders vorteilhaft ist es in diesem Zusammenhang, wenn die Glieder aus Kunststoff gefertigt sind, da sich die nachfolgend beschriebenen Merkmale dann gut umsetzen lassen.

Eine bevorzugte Ausgestaltungsform eines erfindungsgemässen Gliedermassstabs zeichnet sich dadurch aus, dass mindestens ein erstes und ein zweites Glied vorgesehen sind und das erste Glied eine Aussparung aufweist, deren Öffnung von mindestens einem elastischen Element begrenzt wird. Die Aussparung erweitert sich (ausgehend von der Öffnung) nach innen hin, wodurch ein erweiterter Teil der Aussparung oder eine Hinterschneidung gebildet ist. Mit anderen Worten erstreckt sich der erweiterte Teil seitlich oder radial (in Bezug auf die Drehachse) d.h. er vergrössert den Querschnitt der Aussparung. Weiterhin ist zur drehbaren Verbindung des ersten und des zweiten Glieds eine in die Aussparung (zumindeste teilweise) aufnehmbare Achse vorgesehen. Diese weist in einem vorderen Abschnitt (respektive im Bereich des in die Öffnung einzuführenden Endes) mindestens einen sich in radiale Richtung erstreckenden Vorsprung auf, der in den erweiterten Teil der Aussparung aufnehmbar ist und so durch ein Zusammenwirken mit dem elastischen Element ein Herausgleiten der Achse aus der Aussparung verhindert.

Das elastische Element erstreckt sich vorzugsweise in die Aussparung hinein, insbesondere (etwa) in Richtung der Mitte der Aussparung bzw. in Richtung der Drehachse. Man könnte auch sagen, dass das elastische Element die Öffnung der Aussparung respektive die Öffnungsweite definiert. bzw. dass das elastische Element den Rand der Öffnung (oder zumindest einen Teil davon) bildet oder dass es die Aussparung verengt.

Besonders bevorzugt ist es, wenn mehr als ein elastisches Element vorgesehen ist, insbesondere 2 bis 10 oder 3 bis 6, wobei 4 elastische Elemente besonders bevorzugt sind. Soweit nichts Anderes gesagt ist und sich daraus keine Widersprüche ergeben, soll für die anderen elastischen Elemente vorzugsweise gelten, was für das eine elastische Element beschrieben ist.

Einige weitere bevorzugte Merkmale des elastischen Elements sind die Folgenden. Es ist von Vorteil, wenn das elastische Element an zwei oder mehr Stellen mit dem Glied (insbesondere mit der Innenseite der Aussparung) verbunden ist, wobei sich zwischen den Verbindungsstellen ein nicht mit dem Glied verbundener Abschnitt des elastischen Elements erstreckt. Das elastische Element weist zweckmässigerweise die Form eines Bügels oder eines Bogens auf, dessen Enden mit der Innenseite der Aussparung verbundenen sind. Es kann z.B. im Wesentlichen C-förmig gestaltet sein. Bei in die Aussparung aufgenommener Achse weist das elastische Element vorzugsweise eine axiale Ausdehnung auf, die (im Wesentlichen) dem Abstand zwischen dem vorderen Abschnitt der Achse und dem zweitem Glied entspricht.

Gemäss einer bevorzugten Ausgestaltungsform ist der vordere Abschnitt der Achse unter elastischer Verformung des elastischen Elements am elastischen Element vorbei in den erweiterten Teil der Aussparung einführbar. Die Achse ist somit gegen die Federkraft des elastischen Elements in die Aussparung einführbar. Die Verformung der elastischen Elemente, die zu einer Weitung der Öffnung führt, wird beim Verbinden der Glieder durch einen Kontakt mit dem Vorsprung bewirkt. Nachdem der vordere Abschnitt der Achse auf dem Weg in die Aussparung hinein das elastische Element passiert hat, entspannt sich das elastische Element, was wiederum zu einer Verengung der Öffnung führt. Der Vorsprung am vorderen Abschnitt der Achse greift somit in den durch die elastischen Elemente gebildeten erweiterten Teil der Aussparung (bzw. in die Hinterschneidung) ein und verhindert so das Herausgleiten der Achse aus der Aussparung.

Weiterhin ist es von Vorteil, wenn die Achse einen sich an den vorderen Abschnitt anschliessenden mittleren Abschnitt aufweist. Der mittlere Abschnitt steht dabei in Kontakt mit dem elastischen Element, wenn die Achse in die Aussparung und/oder wenn der Vorsprung in den erweiterten Teil der Aussparung aufgenommen ist.

Wenn von der Achse gesprochen wird, so ist (im Zusammenhang mit der Interaktion mit dem ersten Glied) vorzugsweise der mit der Aussparung zusammenwirkende Teil bzw. der in die Aussparung aufnehmbare Teil der Achse gemeint. Das "Ende" der Achse ist dementprechend das freie Ende dieses Teils der Achse. Wenn die Achse vollständig in die Aussparung aufgenommen ist, steht der mittlere Abschnitt in Kontakt mit dem elastischen Element und der vordere Abschnitt bzw. der Vorsprung ist in den erweiterten Teil bzw. die Hinterschneidung der Aussparung aufgenommen.

Bevorzugt sind mindestens zwei Drehpositionen der Achse (oder des zweiten Glieds) vorgesehen, in denen das elastische Element (im Wesentlichen) entspannt ist, d.h. (im Vergleich zu anderen möglichen Drehpositionen) eine minimale Spannung aufweist. Diese Drehpositionen sind stabil, d.h. um sie ineinander überzuführen, müssen die elastischen Elemente weiter verformt und damit Kraft aufgewendet werden. Zusätzlich zu den zwei stabilen Drehpositionen sind mindestens zwei weitere Drehpositionen vorgesehen, in denen das elastische Element im Vergleich dazu gespannt bzw. gespannter ist. Sie stellen die instabilen Drehpositionen dar, d.h. die Übergangszustände zwischen den stabilen Drehpositionen. Vorzugsweise sind mindestens zwei, insbesondere mindestens 4 stabile Drehpositionen vorgesehen, die einer Winkelstellung des zweiten Glieds (relativ zum ersten Glied) von 0, 90,180 und 270 Grad entsprechen. Es kann zweckmässig sein, wenn zusätzlich die stabilen Drehpositionen 45, 135, 225 und 315 Grad verwirklicht sind.

Dies kann unter Anderem dadurch erreicht werden, dass der mittlere Abschnitt mindestens eine Kontaktfläche für den Kontakt mit dem elastischen Element aufweist. Der Abstand zwischen der Kontaktfläche und der gegenüberliegenden Seite der Achse entspricht dabei (im Wesentlichen) dem Abstand zwischen dem elastischen Element und der gegenüberliegenden Seite der Öffnung. Besonders bevorzugt ist der Abstand zwischen der Kontaktfläche und der gegenüberliegenden Seite der Achse nur zwischen 0 und 2 mm, vorzugsweise zwischen 0.01 und 1 mm und insbesondere zwischen 0.05 und 0.5 mm grösser als der Abstand zwischen dem elastischen Element und der gegenüberliegenden Seite der Öffnung (wenn die Achse nicht in die Aussparung aufgenommen ist).

Es ist von Vorteil, wenn die seitlich der Kontaktfläche entlang der Achse (vorzugsweise im Wesentlichen parallel zur Achse) verlaufenden Bereiche des mittleren Abschnitts einen grösseren Abstand vom Achsenmittelpunkt aufweisen als die Kontaktfläche. Sie stellen die Übergänge bzw. Übergangsbereiche zwischen den Kontaktflächen dar. Vorzugsweise sind mindestens zwei einander auf der Achse gegenüberliegende Kontaktflächen vorgesehen. Wenn nun die Achse in der Aussparung gedreht wird, kommen nacheinander die Kontaktflächen (stabile Drehpositionen) und die Übergangsbereiche (instabile Drehpositionen) in Kontakt mit dem elastischen Element.

Nach einer bevorzugten Ausgestaltung ist eine Mehrzahl von in regelmässigen Abständen entlang des Umfangs der Achse angeordneter Kontaktflächen vorgesehen, insbesondere 2 bis 8 oder 3 bis 6 oder 4 Kontaktflächen. Soweit nichts Anderes gesagt ist und sich daraus keine Widersprüche ergeben, soll für die zusätzlichen Kontaktflächen vorzugsweise gelten, was für die weiter oben genannte eine Kontaktfläche beschrieben ist. Die Kontaktflächen stellen vorzugsweise Abflachungen dar. Entsprechend weist der mittlere Abschnitt im Querschnitt bevorzugt ein oder mehrere, insbesondere 2 bis 8 oder 3 bis 6 flache Seiten auf. Mit Vorteil besitzt die Achse im Querschnitt (im Wesentlichen) die Form eines regelmässigen Vielecks, wobei die Ecken vorzugsweise gerundet sind.

Ausserdem ist es von Vorteil, wenn auch mindestens zwei (vorzugsweise einander gegenüberliegende) elastische Elemente vorgesehen sind. Zweckmässigerweise ist eine Mehrzahl von in regelmässigen Abständen entlang des Umfangs der Aussparung bzw. der Öffnung angeordneter elastischer Elemente vorgesehen, insbesondere 2 bis 8 oder 3 bis 6 oder 4 solcher Elemente.

Dasselbe kann für die Anzahl an Vorsprüngen bzw. deren Anordnung entlang des Umfangs des vorderen Teils der Achse gelten. Soweit nichts Anderes gesagt ist und sich daraus keine Widersprüche ergeben, soll für allfällige zusätzlich vorhandene Vorsprünge vorzugsweise gelten, was für den genannten einen Vorsprung beschrieben ist. Es ist jedoch bevorzugt, wenn ein sich (im Wesentlichen) entlang des gesamten Umfangs der Achse erstreckender Vorsprung vorgesehen ist.

Nach einer bevorzugten Ausgestaltungsvariante sind das erste Glied und das elastische Element aus demselben Material (insbesondere Kunststoff) gefertigt, wobei das erste Glied und das elastische Element vorzugsweise einstückig ausgebildet sind. Dies ist mittels Spritzguss gut umsetzbar. Es kann jedoch auch vorteilhaft sein, wenn das elastische Element und das erste Glied aus unterschiedlichen Kunststoffen hergestellt sind. Das elastische Element kann zum Beispiel aus einem weicheren und/oder elastischeren Kunststoff gefertigt sein als das erste Glied. Auch in diesem Fall ist Spritzguss das bevorzugte Herstellungsverfahren. Das zweite Glied und die Achse sind vorzugsweise ebenfalls aus demselben Material (insbesondere Kunststoff) gefertigt, wobei das zweite Glied und die Achse vorzugsweise einstückig ausgebildet sind.

Es kann jedoch auch zweckmässig sein, wenn stattdessen an den zwei miteinander zu verbindenden Enden des ersten und des zweiten Glieds jeweils eine Aussparung vorgesehen ist und die Achse in diese Aussparungen aufnehmbar ist. Die Aussparung am zweiten Glied bzw. die Form des darin aufzunehmenden Teils der Achse können einfacher gestaltet sein, als dies für das erste Glied beschrieben wurde. Die Achse kann z.B. auch drehfest mit dem zweiten Glied verbunden sein. Bevorzugt ist es jedoch, wenn die Aussparung am zweiten Glied und die Achse auch hier eine Schnappverbindung bilden, die die Glieder bzw. die Achse und das zweite Glied aneinander hält. Entsprechend sind eines oder mehrere der im Zusammenhang mit der Schnappverbindung beschriebenen Merkmale (Vorsprung, Hinterschneidung etc.) dann vorzugsweise auch beim zweiten Glied und dem darin aufzunehmenden Teil der Achse verwirklicht.

Bei der gegenwärtig favorisierten Lösung weisen das erste und das zweite Glied jedoch je auf der einen Seite eine Aussparung und auf der anderen Seite eine fest mit dem Glied verbundene Achse auf.

Weiterhin ist es von Vorteil, wenn der Vorsprung am vorderen Abschnitt der Achse sich zum Ende der Achse hin verjüngt bzw. dessen Querschnitt in Richtung zum Ende der Achse hin kleiner wird. Man könnte auch sagen, dass die vom mittleren Abschnitt abgewandte Seite des Vorsprungs schräg zum Ende der Achse hin verläuft. Dies erleichtert das Einführen der Achse in die Aussparung. Zusätzlich oder alternativ dazu kann der Rand der Öffnung und/oder das elastische Element eine Fase aufweisen. Eine solche zur Mitte der Aussparung (bzw. zur Drehachse) hin verlaufende Abschrägung erleichtert ebenfalls das Einführen der Achse.

Weiterhin hat es sich als nützlich erwiesen, wenn die dem mittleren Abschnitt der Achse zugewandte Seite des Vorsprungs im Wesentlichen rechtwinklig zur Drehachse bzw. Längsachse (der Achse) ausgerichtet ist. Vorzugsweise beträgt der Winkel zwischen 70 und 120 Grad, insbesondere zwischen 80 und 110 Grad. Besonders bevorzugt ist es jedoch, wenn die genannte Seite des Vorsprungs leicht schräg zum Ende der Achse hin verläuft, bzw. der erwähnte Winkel kleiner als 90 Grad ist. Die dem erweiterten Teil der Aussparung (Hinterschneidung) zugewandte Seite des elastischen Elements sollte dann schräg zur seitlichen Wand der Aussparung hin verlaufen. Der Winkel zwischen der genannten Seite des elastischen Elements und der Drehachse bzw. Längsachse (einer in die Aussparung aufgenommenen Achse) beträgt vorzugsweise zwischen 70 und 120 Grad, insbesondere zwischen 80 und 110 Grad. Besonders bevorzugt ist es, wenn der genannte Winkel grösser als 90 Grad ist. Dadurch können sich der Vorsprung und das elastische Element ineinander verzahnen und ein Herausziehen der Achse aus der Aussparung ist erschwert.

Die Öffnung der Aussparung am ersten Glied ist auf der dem zweiten Glied zugewandten Seite angeordnet. Es kann vorgesehen sein, dass die Aussparung sich durch das erste Glied hindurch erstreckt bzw. auf der vom zweiten Glied abgewandten Seite des ersten Glieds eine weitere Öffnung angebracht ist und die Aussparung somit durchgehend ausgebildet ist. Bevorzugt ist es jedoch, wenn die Aussparung nicht durchgehend ausgestaltet ist. Die Aussparung weist mit Vorteil nur auf einer Flachseite des ersten Glieds eine Öffnung auf. Somit bleibt das Gelenk dem Benutzer verborgen.

Der Gliedermassstab weist vorzugsweise eine Mehrzahl von in Reihe miteinander verbundener Glieder auf, insbesondere zwischen 2 und 20 oder zwischen 5 und 15 Stück. Die Glieder sind zweckmässigerweise in der für das erste und das zweite Glied beschriebenen Art miteinander verbunden. Die beiden Endglieder weisen im Allgemeinen nur auf einer Seite ein Gelenk auf. Die Länge der Glieder beträgt vorzugsweise zwischen 5 und 30 cm oder zwischen 8 und 26 cm oder zwischen 18 und 22 cm und sie sind einseitig oder beidseitig mit einer Masseinteilung versehen.

Einige bevorzugte Merkmale zusammenfassend kann gesagt werden, dass es von Vorteil ist, wenn der Gliedermassstab sich dadurch auszeichnet, dass
- eine Mehrzahl von Gliedern mit jeweils mindestens einer Aussparung vorgesehen ist, wobei die Aussparung eine Hinterschneidung aufweist und die Hinterschneidung durch eine Mehrzahl sich in die Aussparung hinein erstreckender elastischer Elemente gebildet ist,
- die Achse einen verdickten Kopf und einen mittleren Abschnitt mit einer Mehrzahl von Abflachungen aufweist, wobei
- beim Einführen der Achse in die Aussparung der Kopf unter Verformung der elastischen Elemente an den elastischen Elementen vorbei in die Hinterschneidung einführbar ist und der Kopf in die Hinterschneidung der Aussparung eingreift, wodurch das Herausgleiten der Achse aus der Aussparung verhindert ist,
- an der Achse die (vorzugsweise gerundeten) Bereiche zwischen den Abflachungen dazu ausgebildet sind, beim Übergang zwischen einer ersten und einer zweiten Drehstellung der Achse die elastischen Elementen elastisch zu verformen, und
- das erste Glied und die elastischen Elemente aus Kunststoff gefertigt sind.

Die Aussparung ist am Eingang verengt bzw. weist am Eingang einen Querschnitt auf, der geringer als der Querschnitt des vorderen Abschnitts der Achse ist. Dennoch ist die Achse dank der elastischen Elemente von der mit dem zweiten Glied zu verbindenden Seite des ersten Glieds her in die Aussparung einführbar. Der Kontakt zwischen dem vorderen Abschnitt der Achse bzw. dem Vorsprung und dem elastischen Element wirkt bei vollständig in die Aussparung eingeführter Achse einem Herausgleiten entgegen. Gleichzeitig können die elastischen Elemente durch das Zusammenwirken mit der Achse bestimmte stabile Drehpositionen definieren und damit eine zweite Funktion übernehmen.

Natürlich ist es auch möglich, die elastischen Elemente statt an der Aussparung an der Achse vorzugsehen. Eine solche Variante ist als äquivalent anzusehen. Die in diesem Dokument beschriebenen Ausführungsvarianten seien deshalb auch in einer Form offenbart, in der das elastische Element der Aussparung durch einen Vorsprung ersetzt ist und die Achse statt des Vorsprungs ein elastisches Element aufweist, wobei zusätzlich die Kontaktfläche am mittleren Abschnitt als elastisches Element ausgebildet sein kann. Alle übrigen Merkmale, die für den Vorsprung, das elastische Element und den mittleren Abschnitt beschrieben wurden, seien auch für diese äquivalente Variante offenbart, soweit dies technisch sinnvoll ist. Dies umfasst unter Anderem die Anzahl, Anordnung und Form der entsprechenden Vorrichtungsteile etc.

Ein Herstellungsverfahren für einen Gliedermassstab, und zwar für einen Gliedermassstab mit einer Mehrzahl von Gliedern, die an ihren Enden über Gelenke miteinander verbundenen sind, wobei die Gelenke jeweils eine Aussparung und eine drehbar in der Aussparung gelagerte Achse aufweisen, soll mindestens die folgenden Schritte aufweisen:
- Einführen einer Achse in eine Aussparung an einem ersten Glied, wobei
- die Achse in einem vorderen Abschnitt mindestens einen sich in radiale Richtung erstreckenden Vorsprung aufweist,
- die Aussparung am ersten Glied eine Öffnung aufweist, welche von mindestens einem elastischen Element begrenzt wird,
- die Aussparung sich ausgehend von der Öffnung nach innen hin erweitert, wodurch ein erweiterter Teil der Aussparung gebildet ist, und
- der vordere Teil der Achse unter Verformung des elastischen Elements, am elastischen Element vorbei in den erweiterten Teil der Aussparung eingeführt wird,
- nach der Bewegung des vorderen Teils der Achse am elastischen Element vorbei, das elastische Element (im Wesentlichen) wieder seine ursprüngliche Form (die es vor der elastischen Verformung hatte) annimmt, und so durch ein Zusammenwirken des Vorsprungs mit dem elastischen Element ein Herausgleiten der Achse aus der Aussparung verhindert ist.

Das Verfahren kann darüber hinaus als Verfahrensschritte die Verwendung einer oder mehrerer der genannten bevorzugten Merkmale des erfindungsgemässen Gliedermassstabs (oder die durch diese Merkmale ermöglichten Funktionen) umfassen. Entsprechend kann der erfindungsgemässe Gliedermassstab Mittel aufweisen, die einen oder mehrere der im Zusammenhang mit dem Verfahren genannten Verfahrensschritte durchführen können.

### Kurze Beschreibung der Zeichnungen

Es zeigt in schematischer, nicht massstabsgetreuer Darstellung:
- Fig.1: eine Ausführungsform zweier Glieder eines Gliedermassstabs vor dem Verbinden in perspektivischer Darstellung;
- Fig. 2a: eine perspektivische Schnittdarstellung der Glieder aus Fig.1 vor dem Verbinden;
- Fig. 2b: eine perspektivische Schnittdarstellung der Glieder aus Fig.1 nach dem Verbinden;
- Fig. 3: eine vergrösserte Schnittdarstellung des Bereichs um das elastische Element bei einem ersten Glied gemäss Fig.1;
- Fig. 4a: eine Schnittdarstellung einer alternativen Ausführungsform einer Achse zum Verbinden zweier Glieder;
- Fig. 4b: eine Schnittdarstellung einer alternativen Ausführungsform einer Aussparung am ersten Glied passend zur Achse aus Fig. 4a; und
- Fig. 5: eine Schnittdarstellung einer alternativen Ausführungsform mit gerundeten Vorsprüngen an der Achse.

### Ausführung der Erfindung

Die Erfindung wird nachfolgend anhand der Zeichnungen beispielhaft erläutert.

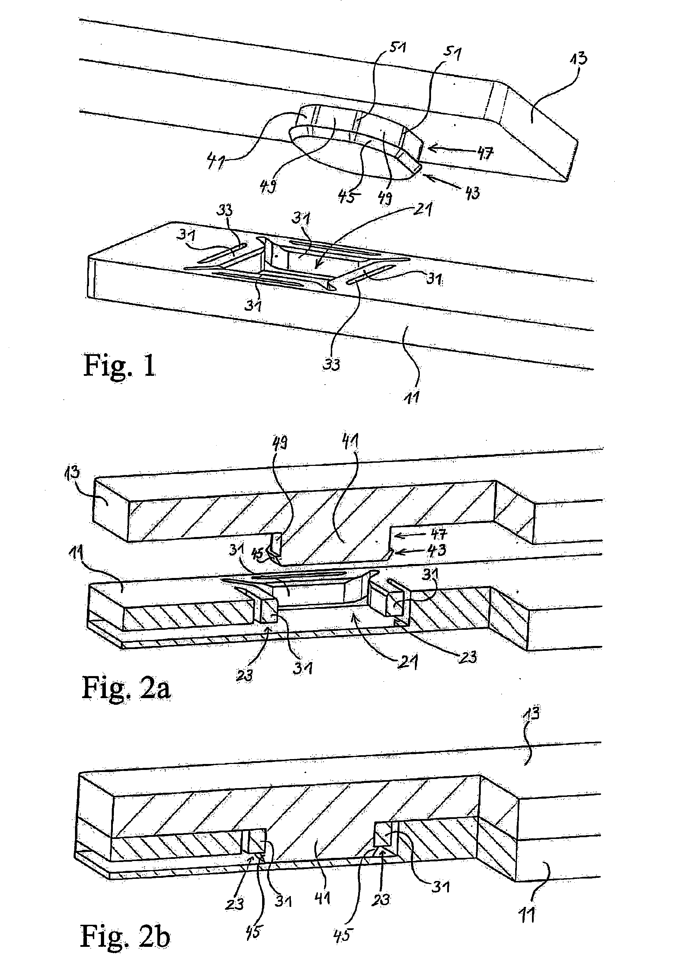

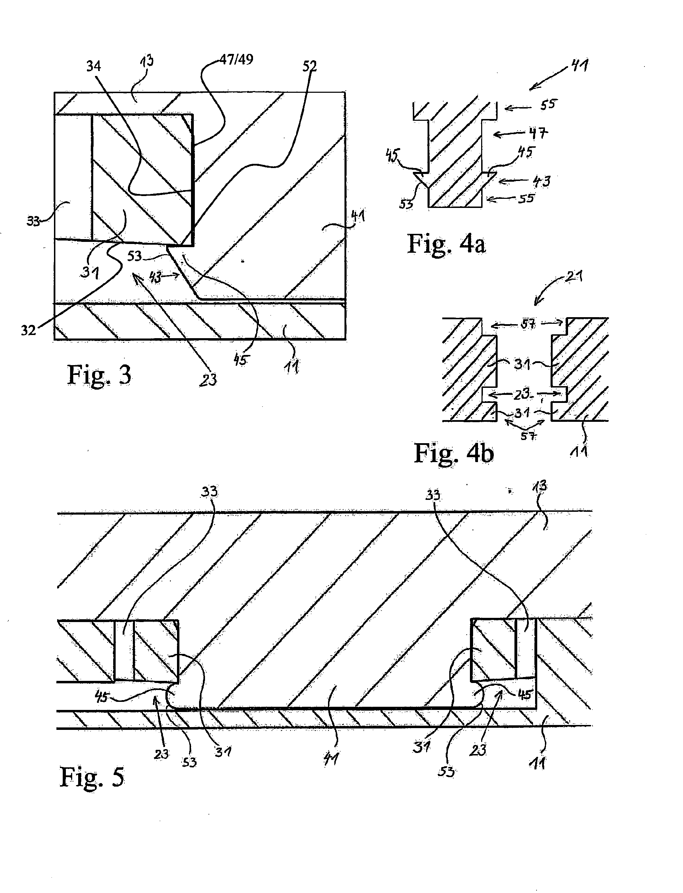

Fig.1 zeigt die Enden zweier Glieder 11, 13 eines Gliedermassstabs. Die Glieder 11, 13 müssen, damit der Gliedermassstab zusammengeklappt werden kann, drehbar miteinander verbunden werden. Dazu ist eine Achse 41 vorgesehen, die drehbar in eine Aussparung 21 an einem ersten Glied 11 aufgenommen werden kann. Die Achse 41 und die Aussparung 21 jeweils benachbarter Glieder wirken als eine Schnappverbindung zusammen und halten die Glieder aneinander. Dazu besitzt die Achse 41 einen vorderen Abschnitt 43, der einen sich (in Bezug auf die Drehachse) radial nach aussen erstreckenden Vorsprung 45 aufweist. Natürlich ist es denkbar, nur einen oder aber eine Mehrzahl Vorsprünge am Umfang der Achse vorzusehen. Es erscheint jedoch in Bezug auf die Stabilität des Gliedermassstabs und die Einfachheit der Herstellung vorteilhaft, einen Vorsprung 45 vorzusehen, der im Wesentlichen entlang des gesamten Umfangs der Achse 41 verläuft. Durch den Vorsprung 45 erhält die Achse 41 im vorderen Abschnitt 43 einen grösseren Querschnitt im Vergleich zu einem sich daran anschliessenden mittleren Abschnitt 47. Die Aussparung 21 weist elastische Elemente 31 auf, die sich in die Aussparung 21 hinein erstrecken und so die Öffnung der Aussparung 21 definieren bzw. begrenzen. Die elastischen Elemente, (insbesondere Federelemente) sind vorzugsweise der in die Aussparung aufgenommenen Achse zugewandt bzw. erstrecken sich in radialer Richtung. Sie sind im gezeigten Beispiel bogenförmig ausgebildet und ihre Enden stehen mit den Seitenwänden der Aussparung 21 in Verbindung. Der Bogenrücken bzw. die der Mitte der Aussparung 21 zugewandten Seiten der elastischen Elemente 31 sind gerade bzw. abgeflacht. Hinter den elastischen Elementen 31 weitet sich die Aussparung 21, wodurch ein erweiterter Teil 23 bzw. eine Hinterschneidung gebildet ist. Dadurch, dass der Querschnitt der Aussparung im Bereich der elastischen Elemente 31 bzw. im Bereich der Öffnung der Aussparung kleiner ist als im Bereich der Hinterschneidung wird es ermöglicht, dass der vordere Abschnitt 43 der Achse 41, (dessen Durchmesser den Abstand zwischen den elastischen Elementen übersteigt) unter Verformung der elastischen Elemente 31 an den elastischen Elementen 31 vorbei in die Hinterschneidung 23 geführt werden kann. Das Einführen wird bei der in Fig.1 gezeigten Ausführungsvariante zusätzlich dadurch erleichtert, dass sich der vordere Abschnitt 43 bzw. der Vorsprung 45 zum Ende der Achse 41 hin verjüngt bzw. eine Fase aufweist. Aus demselben Grund weisen auch die elastischen Elemente 31 an ihren dem zweiten Glied zugewandten Seiten Fasen auf. Es besteht aber natürlich auch die Möglichkeit, keine oder wahlweise nur an der Achse 41 oder nur an den elastischen Elementen 31 solche Abschrägungen vorzusehen. Nachdem der vordere Teil der Achse 43 die elastischen Elemente 31 passiert hat, entspannen sich diese und nähern sich somit der Achse 41 an. Da die elastischen Elemente im entspannten Zustand hinter den Vorsprung 45 der Achse greifen, wirken sie einer Entfernung der Achse 41 aus der Aussparung 21 entgegen. Als "entspannter Zustand" wird hier der Zustand der elastischen Elemente 21 bei vollständig in die Aussparung 21 eingeführter Achse 41 bezeichnet, d.h. wenn der Vorsprung in die Hinterschneidung aufgenommen ist. Vorzugsweise berühren die elastischen Elemente 31 in ihrem entspannten Zustand den mittleren Abschnitt 47 der Achse 41 an Kontaktflächen 49 und drücken gegen diese. So ist die Achse 41 in der Aussparung 21 sicher gehalten bzw. wackelt nicht. Zu diesem Zweck ist es vorgesehen, dass der Abstand zwischen zwei einander gegenüberliegenden elastischen Elementen 21 geringfügig (z.B. um bis zu 2,1 oder 0.5 mm) kleiner ist als der Abstand zwischen einer Kontaktfläche 49 und der der Kontaktfläche 49 gegenüberliegenden Seite der Achse 41 (im Beispiel ist dies ebenfalls eine Kontaktfläche). Wie sich aus Fig.1 ersehen lässt, können die Kontaktflächen 49 die Form von Abflachungen haben. Dadurch ist der Abstand einer solchen Kontaktfläche 49 vom Mittelpunkt der Achse (d.h. von der Drehachse oder Längsachse der Achse 41) geringer als der Abstand des Mittelpunkts der Achse 41 von den Bereichen 51 zwischen den Kontaktflächen (Übergangsbereiche). Dies bewirkt, dass beim Drehen der Achse 41 in der Aussparung 21 sich die elastischen Elemente 31 verformen. Wenn ein elastisches Element 31 in Kontakt mit einem Übergangsbereich 51 steht, ist es somit stärker verformt, als wenn es eine Kontaktfläche 49 berührt. Auf diese Weise wird eine Anzahl an stabilen Drehpositionen der Achse 41 definiert, d.h. Drehpositionen, die nur durch eine zusätzliche bzw. verstärkte Verformung der elastischen Elemente 31 in eine andere Drehposition überführt werden können. Wie in Fig.1 gezeigt, ist es von Vorteil, wenn die Kontaktflächen in regelmässigen Abständen entlang des Umfangs des mittleren Abschnitts 47 der Achse 41 angeordnet sind. Wenn die Kontaktflächen 49 in einem 90-Grad-Winkel zueinander angeordnet sind, können die Glieder 11, 13 im für Handwerker gewohnten 90-Grad-Winkel zueinander ausgerichtet werden. Sind zusätzlich Kontaktflächen 49 vorgesehen, die in einem 45-Grad-Winkel zueinander stehen, so ist auch eine entsprechende Ausrichtung der Glieder 11 und 13 möglich. Im vorliegenden Fall sind 8 Kontaktflächen 49 vorgesehen. Entsprechend ergibt sich für den Querschnitt des mittleren Abschnitts 47 eine im Wesentlichen achteckige Form, wobei die Ecken, d.h. die Übergangsbereiche 51 zwischen den Kontaktflächen 49 mit Vorteil gerundet sind. Wie aus den vorgängigen Ausführungen hervorgeht, übernehmend die elastischen Elemente 31 also zwei wichtige Funktionen. Einerseits stellen sie einen Teil der Schnappverbindung dar und erleichtern so das Verbinden der Glieder 11, 13. Andererseits kontrollieren sie die Drehbewegung der Achse 41 und damit die möglichen Winkelstellungen der Glieder 11, 13. Es ist jedoch durchaus auch denkbar, dass die elastischen Elemente nur als Teil der Schnappverbindung wirken und die Kontrolle der Drehung z.B. durch Vorsprünge und Vertiefungen seitlich der Aussparung erfolgt, wie dies aus dem Stand der Technik bekannt ist. Eine weitere Möglichkeit besteht darin, die Kontrolle der Drehung durch zusätzliche elastische Elemente zu bewerkstelligen, wie dies in Fig.4b gezeigt ist, wobei diese alternativen Lösungen komplizierter sind. Zu erwähnen ist ausserdem, dass die Aussparung 21 im gezeigten Beispiel der Fig.1 nur auf eine Seite des ersten Glieds 11 hin offen ist. So bleibt die Verbindung zwischen den Gliedern 11 und 13 unsichtbar und der Bereich auf der der Öffnung gegenüberliegenden Flachseite des Glieds 11 kann ebenfalls bedruckt bzw. geprägt werden. Es ist aber natürlich auch vorstellbar, dass die Aussparung 21 zwei Öffnungen (eine auf jeder Seite des Glieds 11) aufweist, d.h. durchgehend ausgestaltet ist. Weiterhin ist es möglich, die elastischen Elemente 21 zu befestigen, indem z.B. ein Einsatz, der die elastischen Elemente aufweist, in eine Aussparung im Glied eingefügt und dort befestigt wird. So könnten die Glieder z.B. auch aus Holz gefertigt werden. Vorteilhafter ist es jedoch, wenn die elastischen Elemente 31 und das erste Glied 11 einstückig ausgebildet sind, z.B. durch ein Spritzgussverfahren. Als Material für die Glieder 11, 13 kommen in einem solchen Fall Metall (z.B. Stahl, Aluminium) und insbesondere Kunststoff in Betracht. Im gezeigten Beispiel sind das zweite Glied 13 und die Achse 41 einstückig ausgebildet. Es ist jedoch auch denkbar, stattdessen am zweiten Glied 13 ebenfalls eine Aussparung vorzusehen und die Achse in Form eines mit dem zweiten Glied 13 verbindbaren Teils zur Verfügung zu stellen. Eine solche Achse könnte z.B. an beiden Enden einen Vorsprung aufweisen und mittels Schnappverbindung mit den Gliedern verbunden werden.

Fig. 2a und 2b zeigen die Glieder 11,13 in getrenntem (Fig.2a) und in verbundenem (Fig.2b) Zustand, um das Zusammenwirken der Achse 41 und der Aussparung 21 zu erklären. Die Ausdehnung in Richtung der Achse (genauer: in Richtung der Längsachse oder Drehachse der Achse 41) soll als "axiale Ausdehnung" bezeichnet werden und zwar im Zustand wenn die Achse 41 in die Aussparung 21 aufgenommen ist. Wie aus Fig.2b ersichtlich ist, entspricht die axiale Ausdehnung des mittleren Abschnitts 47 mit Vorteil (im Wesentlichen) der axialen Ausdehnung der elastischen Elemente 31. Vorzugsweise entspricht zudem die axiale Ausdehnung des vorderen Abschnitts 43 der Achse 41 im Wesentlichen der axialen Ausdehnung der Hinterschneidung 23.

Fig. 3 zeigt eine vergrösserte Schnittdarstellung des Bereichs um ein elastisches Element 31 und dient der Illustration eines bevorzugten Merkmals des erfindungsgemässen Gliedermassstabs. Gemäss Fig. 3 bildet der Vorsprung einen Widerhaken. Dazu verläuft die dem mittleren Abschnitt 47 zugewandte Seite des Vorsprungs 45 in Richtung des Endes der Achse 41. Vorzugsweise schliessen die dem mittleren Abschnitt 47 zugewandte Seite des Vorsprungs 45 und eine Kontaktfläche 49 einen Winkel ein, der kleiner als 90 Grad ist, insbesondere 89.5 bis 70 Grad oder 89 bis 80 Grad. Die der Hinterschneidung 23 zugewandte Seite des elastischen Elements 31 und die dem mittleren Abschnitt 47 der Achse 41 zugewandte Seite des elastischen Elements 31 schliessen vorzugsweise ebenfalls einen oben genannten Winkel von weniger als 90 Grad ein. Dadurch ist es ermöglicht, dass der Vorsprung 45 und das elastische Element 31 bei einer Bewegung der Achse 41 aus der Aussparung 21 heraus ineinandergreifen bzw. sich verzahnen. Dies bewirkt, dass das elastische Element 31 beim Herausziehen der Achse 41 an die Achse herangezogen wird und somit kaum über den Vorsprung 45 hinweg zu gleiten vermag, was die Entfernung der Achse 41 aus der Aussparung 21 erschwert und damit zur Stabilität der Verbindung zwischen den Gliedern 11, 13 beiträgt.

Fig. 4a und 4b zeigen eine alternative Ausgestaltungsvariante einer Achse (Fig. 4a) bzw. einer Aussparung (Fig. 4b). Der wesentliche Unterschied besteht darin, dass zwischen dem Ende der Achse 41 und dem als vorderer Abschnitt 43 bezeichneten Teil ein weiterer Abschnitt 55 vorgesehen ist. Dieser Abschnitt 55 weist einen kleineren Querschnitt auf, als der vordere Abschnitt 43 und dient der Stabilisierung der gelenkigen Verbindung zwischen den Gliedern. Alternativ oder zusätzlich dazu kann auch auf der anderen bzw. gegenüberliegenden Seite des mittleren Abschnitts 47 ein Abschnitt 55 vorgesehen sein. Dieser weist mit Vorteil einen grösseren Querschnitt als der mittlere Abschnitt 47 auf. Die beschriebenen Stabilisierungsabschnitte 55 sind im Querschnitt vorzugsweise rund. Entsprechend weist die Aussparung 21 eine oder mehrere Aufnahmen 57 für die Stabilisierungsabschnitte 55 auf, wobei deren Innenkontur im Wesentlichen der Aussenkontur des entsprechenden Stabilisierungsabschnitts 55 entspricht. Wenn die Aufnahmen 57 für die Stabilisierungsabschnitte 55 keine elastischen Elemente aufweisen, so können sie Radialkräfte gut aufnehmen. Somit werden die elastischen Elemente 31 entlastet. Eine solche Konstruktion kann jedoch bei geringer Dicke der Glieder schwierig umzusetzen sein, da sie mehr Platz benötigt. Es ist auch denkbar - wie weiter oben bereits angesprochen - dass elastische Elemente vorgesehen sind, die als Teil der Schnappverbindung wirken, im axialen Abstand davon jedoch zusätzliche elastische Elemente 31 vorgesehen sind, die primär der Kontrolle der Drehbewegung der Achse dienen. Dies ist in Fig. 4b angedeutet, indem der unteren Aufnahme für einen Stabilisierungsabschnitt zusätzlich zum Bezugszeichen 57 das Bezugszeichen 31 zugeordnet wurde, um anzudeuten, wo sich (anstelle der Aufnahme 57 für den Stabilisierungsabschnitt) elastische Elemente 31 befinden könnten. Ein weiterer Aspekt, der in den Fig. 4a und 4b dargestellt ist, besteht im Vorhandensein von zwei Öffnungen für die Aussparung 21. Neben der Öffnung auf der dem zweiten Glied 13 zugewandten Seite ist eine zweite Öffnung auf der vom ersten Glied 11 abgewandten Seite vorgesehen, d.h. die Aussparung 21 besitzt auf beiden Flachseiten des ersten Glieds 11 jeweils eine Öffnung und ist somit durchgehend ausgebildet.

Fig. 5 zeigt eine alternative Ausgestaltungsform des Vorsprungs 45, welcher im Querschnitt im Wesentlichen die Form eines Kreissegments aufweist, also einen rundlichen Wulst bildet. Bei dieser Ausgestaltungsform sollten die Massnahmen zur Verzahnung zwischen Vorsprung und elastischem Element, wie sie oben beschrieben wurden, ergriffen werden. Ansonsten besteht die Gefahr, dass die Achse 41 zu leicht aus der Aussparung 21 gleitet.

### Bezugszeichenliste:

- 11: erstes Glied
- 13: zweites Glied
- 21: Aussparung
- 23: erweiterter Teil der Aussparung / Hinterschneidung
- 31: elastisches Element
- 32: der Hinterschneidung zugewandte Seite des elastischen Elements
- 33: Spalt
- 34: dem mittleren Abschnitt zugewandte Seite des elastischen Elements
- 41: Achse
- 43: vorderer Abschnitt der Achse / Rastabschnitt der Achse / Kopf
- 45: Vorsprung
- 47: mittlerer Abschnitt der Achse / Kontaktabschnitt der Achse
- 49: Kontaktfläche / Abflachung
- 51: Bereiche seitlich der Kontaktfläche / Übergang zwischen Kontaktflächen
- 52: dem mittleren Abschnitt zugewandte Seite des Vorsprungs
- 53: vom mittleren Abschnitt abgewandte Seite des Vorsprungs
- 55: Stabilisierungsabschnitt der Achse
- 57: Aufnahmen für Stabilisierungsabschnitte

## Patentansprüche

1. Gliedermassstab mit einer Mehrzahl von Gliedern (11, 13), die an ihren Enden über Gelenke miteinander verbundenen sind, wobei die Gelenke jeweils eine Aussparung (21) und eine drehbar in der Aussparung (21) gelagerte Achse (41) aufweisen, wobei
- die Aussparungen (21) und Achsen (41) Schnappverbindungen bilden, die die Glieder (11, 13) aneinander halten,
- mindestens ein erstes und ein zweites Glied (11,13) vorgesehen sind,
- das erste Glied (11) eine Aussparung (21) aufweist, deren Öffnung von mindestens einem elastischen Element (31) begrenzt wird,
- zur drehbaren Verbindung des ersten und des zweiten Glieds (13) eine in die Aussparung (21) aufnehmbare Achse (41) vorgesehen ist, und
- die Achse (41) einen vorderen Abschnitt (43) und einen sich an den vorderen Abschnitt (43) anschliessenden mittleren Abschnitt (47) aufweist, wobei der mittlere Abschnitt (47) in Kontakt mit dem elastischen Element (31) steht, wenn die Achse (41) in die Aussparung (21) aufgenommen ist, **dadurch gekennzeichnet, dass**
- der mittlere Abschnitt (47) mehrere Kontaktflächen (49) für den Kontakt mit dem mindestens einen elastischen Element (31) aufweist, und
- die seitlich der und zwischen den Kontaktflächen (49) entlang der Achse (41) verlaufenden Übergansgbereiche (51) des mittleren Abschnitts (47) einen grösseren Abstand vom Achsenmittelpunkt aufweisen als die Kontaktflächen (49).

2. Gliedermassstab nach Anspruch 1, **dadurch gekennzeichnet, dass**
- eine Mehrzahl von Gliedern (11, 13) mit jeweils mindestens einer Aussparung (21) vorgesehen ist, wobei die Aussparung (21) eine Hinterschneidung (23) aufweist und die Hinterschneidung (23) durch eine Mehrzahl sich in die Aussparung (21) hinein erstreckender elastischer Elemente (31) gebildet ist,
- der vordere Abschnitt (43) der Achse einen verdickten Kopf bildet und der mittlere Abschnitt (47) als Kontaktflächen (49) eine Mehrzahl von Abflachungen aufweist, wobei
- beim Einführen der Achse (41) in die Aussparung (21) der Kopf (43) unter Verformung der elastischen Elemente (31) an den elastischen Elementen (31) vorbei in die Hinterschneidung (23) einführbar ist und der Kopf (43) in die Hinterschneidung (23) der Aussparung (21) eingreift, wodurch das Herausgleiten der Achse (41) aus der Aussparung (21) verhindert ist,
- an der Achse (41) die Bereiche (51) zwischen den Abflachungen (49) dazu ausgebildet sind, beim Übergang zwischen einer ersten und einer zweiten Drehstellung der Achse (41) die elastischen Elementen (31) elastisch zu verformen, und
- das erste Glied (11) und die elastischen Elemente (31) aus Kunststoff gefertigt sind.

3. Gliedermassstab nach Anspruch 1, **dadurch gekennzeichnet, dass**
- die Aussparung (21) sich ausgehend von der Öffnung nach innen hin erweitert, wodurch ein erweiterter Teil (23) der Aussparung gebildet ist,
- die Achse (41) im vorderen Abschnitt (43) mindestens einen sich in radiale Richtung erstreckenden Vorsprung (45) aufweist, der in den erweiterten Teil (23) der Aussparung (21) aufnehmbar ist und so durch ein Zusammenwirken mit dem elastischen Element (31) ein Herausgleiten der Achse (41) aus der Aussparung (21) verhindert.

4. Gliedermassstab nach Anspruch 3, **dadurch gekennzeichnet, dass** der vordere Abschnitt (43) der Achse (41) unter elastischer Verformung des elastischen Elements (31) am elastischen Element (31) vorbei in den erweiterten Teil (23) der Aussparung (21) einführbar ist.

5. Gliedermassstab nach einem der Ansprüche 3 bis 4, **dadurch gekennzeichnet, dass** der Vorsprung (45) am vorderen Abschnitt (43) der Achse (41) sich zum Ende der Achse (41) hin verjüngt.

6. Gliedermassstab nach einem der Ansprüche 3 bis 5, **dadurch gekennzeichnet, dass**
- die dem mittleren Abschnitt (47) der Achse (41) zugewandte Seite des Vorsprungs (45) schräg zum Ende der Achse (41) hin verläuft, und
- die dem erweiterten Teil (23) der Aussparung zugewandte Seite des elastischen Elements (31) schräg zur seitlichen Wand der Aussparung (21) hin verläuft.

7. Gliedermassstab nach einem der Ansprüche 1 oder 3 bis 6, **dadurch gekennzeichnet, dass** mindestens zwei Drehpositionen der Achse (41) vorgesehen sind, in denen das elastische Element (31) entspannt ist und mindestens zwei Drehpositionen vorgesehen sind, in denen das elastische Element (31) gespannt ist.

8. Gliedermassstab nach einem der Ansprüche 1 oder 3 bis 7, **dadurch gekennzeichnet, dass** der Abstand zwischen der Kontaktfläche (49) und der gegenüberliegenden Seite der Achse (41) im Wesentlichen dem Abstand zwischen dem elastischen Element (31) und der gegenüberliegenden Seite der Öffnung entspricht.

9. Gliedermassstab nach einem der Ansprüche 1 oder 3 bis 8, **dadurch gekennzeichnet, dass** das erste Glied (11) und das elastische Element (31) aus Kunststoff gefertigt sind, wobei das erste Glied (11) und das elastische Element (31) vorzugsweise einstückig ausgebildet sind.

10. Gliedermassstab nach einem der Ansprüche 1 oder 3 bis 9, **dadurch gekennzeichnet, dass** das zweite Glied (13) und die Achse (41) aus Kunststoff gefertigt sind, wobei das zweite Glied (13) und die Achse (41) vorzugsweise einstückig ausgebildet sind.

11. Gliedermassstab nach einem der Ansprüche 1 oder 3 bis 10, **dadurch gekennzeichnet, dass** mindestens zwei elastische Elemente (31) vorgesehen sind.

12. Gliedermassstab nach einem der Ansprüche 1 oder 3 bis 11, **dadurch gekennzeichnet, dass** die Aussparung (21) nur auf einer Flachseite des ersten Glieds (11) eine Öffnung aufweist.

## Claims

1. Folding ruler with a multitude of elements (11, 13) that are connected with each other at their ends by joints, whereby the joints have respectively a recess (21) and an axis (41) positioned rotatable in the recess (21), whereby
- the recesses (21) and the axes (41) form snap connections that held the elements (11, 13) against each other,
- at least a first and a second element (11, 13) are provided,
- the first element (11) has a recess (21), the opening of which is limited by at least one resilient element (31),
- an axis (41) that can be received in the recess (11) is provided for the rotatable connection of the first and of the second element (13) and
- the axis (41) has a front portion (43) and a central portion (47) attached to the front portion (43), whereby the central portion (47) is in contact with the resilient element (31) when the axis (41) is received in the recess (21),
**characterized in that**
- the central portion (47) has several contact surfaces (49) for the contact with the at least one resilient element (31) and
- the transition areas (51) of the central portion (47) on the side of and between the contact surfaces (49) along the axis (41) have a bigger distance from the axis central point than the contact surfaces (49).

2. Folding ruler according to claim 1, **characterized in that**
- a multitude of elements (11, 13) with respectively at least one recess (21) is provided, whereby the recess (21) has an undercut (23) and the undercut (23) is formed by a multitude of resilient elements (31) extending into the recess (21),
- the front portion (43) of the axis forms a thickened head and the central portion (47) has a multitude of flattenings as contact surfaces (49), whereby
- when introducing the axis (41) into the recess (21), the head (43) meshes into the undercut (23) of the recess (21) under deformation of the resilient elements (31) past the resilient elements (31) so that the sliding out of the axis (41) out of the recess (21) is prevented,
- the areas (51) between the flattenings (49) on the axis (41) are configured to elastically deform the resilient elements (31) at the transition between a first and a second rotational position of the axis (41) and
- the first element (11) and the resilient elements (31) are made of plastics.

3. Folding ruler according to claim 1, **characterized in that**
- the recess (21) widens inwards starting from the opening so that a widened part (23) of the recess is formed,
- the axis (41) has in the front portion (43) at least a projection (45) that extends in a radial direction, projection that can be received in the widened part (23) of the recess (21) and thus prevents a sliding out of the axis (41) out of the recess (21).

4. Folding ruler according to claim 3, **characterized in that** the front portion (43) of the axis (41) can be introduced into the widened part (23) of the recess (21) by elastically deforming the resilient element (31) past the resilient element (31).

5. Folding ruler according to one of the claims 3 to 4, **characterized in that** the projection (45) on the front portion (43) of the axis (41) tapers to the end of the axis (41).

6. Folding ruler according to one of the claims 3 to 5, **characterized in that**
- the side of the projection (45) that is turned to the central portion (47) of the axis (41) runs obliquely to the end of the axis (41) and
- the side of the resilient element (31) turned to the widened part (23) of the recess runs obliquely to the lateral wall of the recess (21).

7. Folding ruler according to one of the claims 1 or 3 to 6, **characterized in that** at least two rotational positions of the axis (41) are provided in which the resilient element (31) is unbent and at least two rotational positions are provided in which the resilient element (31) is tensed.

8. Folding ruler according to one of the claims 1 or 3 to 7, **characterized in that** the distance between the contact surface (49) and the opposite side of the axis (41) substantially corresponds to the distance between the resilient element (31) and the opposite side of the opening.

9. Folding ruler according to one of the claims 1 or 3 to 8, **characterized in that** the first element (11) and the resilient element (31) are made of plastics, whereby the first element (11) and the elastic element (31) are preferably formed in one piece.

10. Folding ruler according to one of the claims 1 or 3 to 9, **characterized in that** the second element (13) and the axis (41) are made of plastics, whereby the second element (13) and the axis (41) are preferably formed in one piece.

11. Folding ruler according to one of the claims 1 or 3 to 10, **characterized in that** at least two resilient elements (31) are provided.

12. Folding ruler according to one of the claims 1 or 3 to 11, **characterized in that** the recess (21) has an opening only on a flat side of the first element (11).

## Revendications

1. Mètre pliant avec une multitude d'éléments (11, 13) qui sont reliés l'un à l'autre à leurs extrémités par des articulations, les articulations présentant respectivement un évidement (21) et un axe (41) positionné rotatif dans l'évidement (21),
- les évidements (21) et les axes (41) formant des assemblages à encliquetage qui tiennent les éléments (11, 13) les uns sur les autres,
- au moins un premier et un second élément (11, 13) étant prévus,
- les premier élément (11) présentant un évidement (21) dont l'ouverture est délimitée par au moins un élément élastique (31),
- un axe (41) qui peut être logé dans l'évidement (21) étant prévu pour la jonction rotative du premier et du second élément (13) et
- l'axe (41) présentant une section antérieure (43) et une section centrale (47) qui se rattache à la section antérieure (43), la section centrale (47) étant en contact avec l'élément élastique (31) lorsque l'axe (41) est logé dans l'évidement (21),
**caractérisé en ce que**
- la section centrale (47) présente plusieurs surfaces de contact (49) pour le contact avec l'élément élastique qui existe au moins (31) et
- les zones de transition (51) de la section centrale (47) qui se trouvent sur le côté et entre les surfaces de contact (49) le long de l'axe (41) présentant une plus grande distance par rapport au centre de l'axe que les surfaces de contact (49).

2. Mètre pliant selon la revendication 1, **caractérisé en ce**
- **qu'**une multitude d'éléments (11, 13) est prévue avec respectivement au moins un évidement (21), l'évidement (21) présentant une contre-dépouille (23) et la contre-dépouille (23) étant formée par une multitude d'éléments élastiques (31) qui s'étendent dans l'intérieur de l'évidement (21),
- la section antérieure (43) de l'axe formant une tête épaissie et la section centrale (47) présentant comme surfaces de contact (49) une multitude de méplats,
- cependant que, lors de l'introduction de l'axe (41) dans l'évidement (21), la tête (43) peut être introduite dans la contre-dépouille (23) en déformant les éléments élastiques (31) en passant par les éléments élastiques (31) et la tête (43) s'engrenant dans la contre-dépouille (23) de l'évidement (21) si bien que la sortie par glissement de l'axe (41) hors de l'évidement (21) est évitée,
- les zones (51) entre les méplats (49) sur l'axe (41) étant configurées pour déformer élastiquement les éléments élastiques (31) lors de la transition entre une première et une seconde position rotative de l'axe (41) et
- le premier élément (11) et les éléments élastiques (31) étant fabriqués en matière plastique.

3. Mètre pliant selon la revendication 1, **caractérisé en ce que**
- l'évidement (21) s'élargit vers l'intérieur en partant de l'ouverture si bien qu'une partie élargie (23) de l'évidement est formée,
- l'axe (41) présente, dans la section antérieure (43), au moins une saillie (45) qui s'étend dans le sens radial qui peut être logée dans la partie élargie (23) de l'évidement (21) et qui empêche ainsi une sortie par glissement de l'axe (41) hors de l'évidement (21) par une interaction avec l'élément élastique (31).

4. Mètre pliant selon la revendication 3, **caractérisé en ce que** la section antérieure (43) de l'axe (41) peut être introduite dans la partie élargie (23) de l'évidement (21) par déformation élastique de l'élément élastique (31) en passant par l'élément élastique (31).

5. Mètre pliant selon l'une des revendications 3 à 4, **caractérisé en ce que** la saillie (45) sur la section antérieure (43) de l'axe (41) s'effile vers l'extrémité de l'axe (41).

6. Mètre pliant selon l'une des revendications 3 à 5, **caractérisé en ce que**
- le côté de la saillie (45) qui est tourné vers la section centrale (47) de l'axe (41) va en oblique vers l'extrémité de l'axe (41) et
- le côté de l'élément élastique (31) qui est tourné vers la partie élargie (23) de l'évidement va en oblique vers la paroi latérale de l'évidement (21).

7. Mètre pliant selon l'une des revendications 1 ou 3 à 6, **caractérisé en ce qu'**au moins deux positions rotatives de l'axe (41) sont prévues dans lesquelles l'élément élastique (31) est détendu et au moins deux positions rotatives sont prévues dans lesquelles l'élément élastique (31) est tendu.

8. Mètre pliant selon l'une des revendications 1 ou 3 à 7, **caractérisé en ce que** la distance entre la surface de contact (49) et le côté opposé de l'axe (41) correspond substantiellement à la distance entre l'élément élastique (31) et le côté opposé de l'ouverture.

9. Mètre pliant selon l'une des revendications 1 ou 3 à 8, **caractérisé en ce que** le premier élément (11) et l'élément élastique (31) sont fabriqués en matière plastique, le premier élément (11) et l'élément élastique (31) étant configurés de préférence en une pièce.

10. Mètre pliant selon l'une des revendications 1 ou 3 à 9, **caractérisé en ce que** le second élément (13) et l'axe (41) sont fabriqués en matière plastique, le second élément (13) et l'axe (41) étant configurés de préférence en une pièce.

11. Mètre pliant selon l'une des revendications 1 ou 3 à 10, **caractérisé en ce qu'**au moins deux éléments élastiques (31) sont prévus.

12. Mètre pliant selon l'une des revendications 1 ou 3 à 11, **caractérisé en ce que** l'évidement (21) ne présente une ouverture que sur un côté plat du premier élément (11).
